# EUROPÄISCHE PATENTSCHRIFT

(11) **EP 0 881 121 B1**
(45) Veröffentlichungstag und Bekanntmachung des Hinweises auf die Patenterteilung: **14.12.2005**
(21) Anmeldenummer: 98109260.4
(22) Anmeldetag: 22.05.1998
(51) Int. Cl.: B60Q 1/26

(54) **Warnblinklichtanlage für Kraftfahrzeugdächer**
Hazard warning device for vehicle
Installation de feux de détresse pour véhicule

(30) Priorität: 31.05.1997 DE 19722963
(43) Veröffentlichungstag der Anmeldung: 02.12.1998
(73) Patentinhaber: Hella KGaA Hueck & Co., 59552 Lippstadt (DE)
(72) Erfinder: Müller, Hans Dieter, 33184 Altenbeken (DE); Sebastian, Helmut, 33104 Paderborn (DE); Schreckenberg, Franz-Josef, 33178 Borchen (DE); Strelow, Jörg, 33142 Büren (DE); Schübel, Gerhard, 33098 Paderborn (DE)

(56) Entgegenhaltungen:
- GB-A- 2 292 792
- US-A- 4 004 274
- US-A- 4 240 062
- US-A- 4 357 595
- US-A- 4 626 966

## Beschreibung

Die Erfindung betrifft eine Warnblinklichtanlage nach dem Oberbegriff des Anspruchs 1.

Eine derartige Warnblinklichtanlage ist aus der DE 29 00 188 A1 vorbekannt. Diese vorbekannte Warnblinklichtanlage weist nur einen elektrischen Antriebsmotor zum Antrieb aller Rundumkennleuchten an beiden Enden des Dachbalkens auf. Die Kraftübertragung zwischen den Warnblinkleuchten jeweils eines Endes des Dachbalkens erfolgt durch Zahnräder. Die Kraftübertragung von einem Ende des Dachbalkens zum anderen Ende des Dachbalkens erfolgt über einen Treibriemen.

Diese vorbekannte Warnblinklichtanlage weist jedoch Nachteile auf. So ist die Kraftübertragung mittels Zahnrädern zwischen den Rundumkennleuchten sehr fertigungs- und kostenaufwendig. Zudem kann diese Art der Kraftübertragung unerwünschte Geräusche verursachen. Darüber hinaus stehen alle Rundumkennleuchten bei Ausfall des einen Antriebsmotors still, so daß die gewünschte Warnblinklichtfunktion nicht mehr ausgeübt werden kann. Schließlich fällt bei einem Riß des Treibriemens die gesamte Gruppe von Rundumkennleuchten eines Endes des Dachbalkens aus, was die Warnblinklichtfunktion zumindest stark einschränkt.

Die Erfindung hat die Aufgabe, eine Warnblinklichtanlage für Kraftfahrzeugdächer zu schaffen, die bei deutlich verringertem Konstruktions- und Kostenaufwand eine größere Sicherheit der Warnfunktion gewährleistet.

Diese Aufgabe wird erfindungsgemäß durch die Kennzeichenmerkmale des Anspruchs 1 gelöst.

Dadurch daß den Rundumkennleuchten einer Haube jeweils ein Antriebsmotor zugeordnet ist, ist auch bei Ausfall eines der beiden Antriebsmotoren eine, wenn auch verminderte, Warnfunktion der Warnblinklichtanlage gewährleistet, weil dann nur die Rundumkennleuchten eines Endes des Dachbalkens ausfallen, wogegen die Rundumkennleuchten des anderen Endes des Dachbalkens weiterhin in Funktion sind und die Blinklichtfunktion ausüben können.

Dadurch daß der Antriebsmotor jeweils den äußeren Rundumkennleuchten zugeordnet ist, wird auch bei einem Riß des Treibriemens eine größtmögliche Warnfunktion gewährleistet, weil die weiterhin funktionsfähige äußere Rundumkennleuchte den vollen Winkelbereich des Raumsektors abdeckt.

Durch die Verbindung nur der Rundumkennleuchten jeweils einer Haube durch Treibriemen wird gegenüber dem Vorbekannten auf das kostenaufwendige und geräuschverursachende Zahnradgetriebe verzichtet. Darüber hinaus ist die Kraftübertragung mittels Zahnriemen ähnlich betriebssicher. An jedem Ende des Dachbalkens ist jeweils nur ein elektrischer Antriebsmotor erforderlich.

Durch die erfindungsgemäßen Maßnahmen wird also eine Warnblinklichtanlage für Kraftfahrzeuge geschaffen, die bei gegenüber dem Vorbekannten deutlich verringertem Konstruktions- und Kostenaufwand ein hohes Maß an Warnfunktionsfähigkeit, auch bei Ausfall einzelner Rundumkennleuchten, sei es durch Ausfall einer Glühlampe, durch Riß des Treibriemens oder durch Ausfall eines elektrischen Antriebsmotors, gewährleistet.

Vorteilhafte Ausgestaltung und Weiterbildung der erfindungsgemäßen Warnblinklichtanlage ergeben sich aus den Unteransprüchen.

So ist es besonders vorteilhaft, wenn die Rundumkennleuchten jeweils einer Haube eine Einrichtung zur Kontrolle der Rotation des Reflektors aufweisen, die der inneren Rundumkennleuchte zugeordnet ist. Mit diesen Maßnahmen kann nicht nur der Ausfall eines Antriebsmotors, sondern auch der Riß des Treibriemens erfaßt und durch in der Warnblinklichtanlage angeordnete Einrichtungen entsprechend reagiert werden. In diesem Zusammenhang können die Einrichtungen jeweils einen dem Reflektor der inneren Rundumkennleuchte zugeordneten Magneten aufweisen, der sich gemeinsam mit dem Reflektor dreht. In diesem Zusammenhang können den Magneten jeweils Hallsensoren zugeordnet sein, die die Drehbewegungen der Magneten, und damit der Reflektoren, durch das sich ändernde Magnetfeld erfassen.

Besonders vorteilhaft können alle Rundumkennleuchten jeweils eine Einrichtung zur Kontrolle der Glühlampen aufweisen, um auch den Ausfall von Glühlampen zu erfassen und diesen Ausfall dem Bediener des Kraftfahrzeuges zu melden und gegebenenfalls durch entsprechende Schaltung der Rundumkennleuchte auf diese Defekte zu reagieren.

In diesem Zusammenhang kann bei Ausfall einer Glühlampe oder Stillstand eines Reflektors nur die betroffene Rundumkennleuchte ausgeschaltet werden, um den Verlust an Warnsignalfunktion bei einem derartigen Ausfall so gering wie möglich zu halten. Es ist jedoch auch möglich, bei Ausfall einer Glühlampe oder Stillstand eines Reflektors alle Rundumkennleuchten des betroffenen Endes der Warnblinklichtanlage auszuschalten, um zwar noch eine verminderte Warnfunktion der Warnblinklichtanlage zu gewährleisten. Andererseits wird so dem Bediener des Kraftfahrzeuges der aufgetretene Fehler recht deutlich signalisiert. Die Signalisierung des aufgetretenen Fehlers ist am deutlichsten, wenn bei Ausfall einer Glühlampe oder Stillstand eines Reflektors alle Rundumkennleuchten der Warnblinklichtanlage ausgeschaltet werden. In diesem Fall steht jedoch bei einem derartigen Effekt keine Warnfunktion durch die Warnblinklichtanlage mehr zur Verfügung.

Schließlich kann der Treibriemen besonders vorteilhaft ein Zahnriemen sein, der sich durch eine hohe Lebensdauer und dadurch auszeichnet, daß die Drehstellung der Reflektoren der einzelnen Rundumkennleuchten zueinander klar definiert bei der Montage der Warnblinklichtanlage eingestellt werden können.

Ein Ausführungsbeispiel einer erfindungsgemäßen Warnblinklichtanlage ist in den Zeichnungen dargestellt und wird im folgenden anhand der Zeichnung näher erläutert.

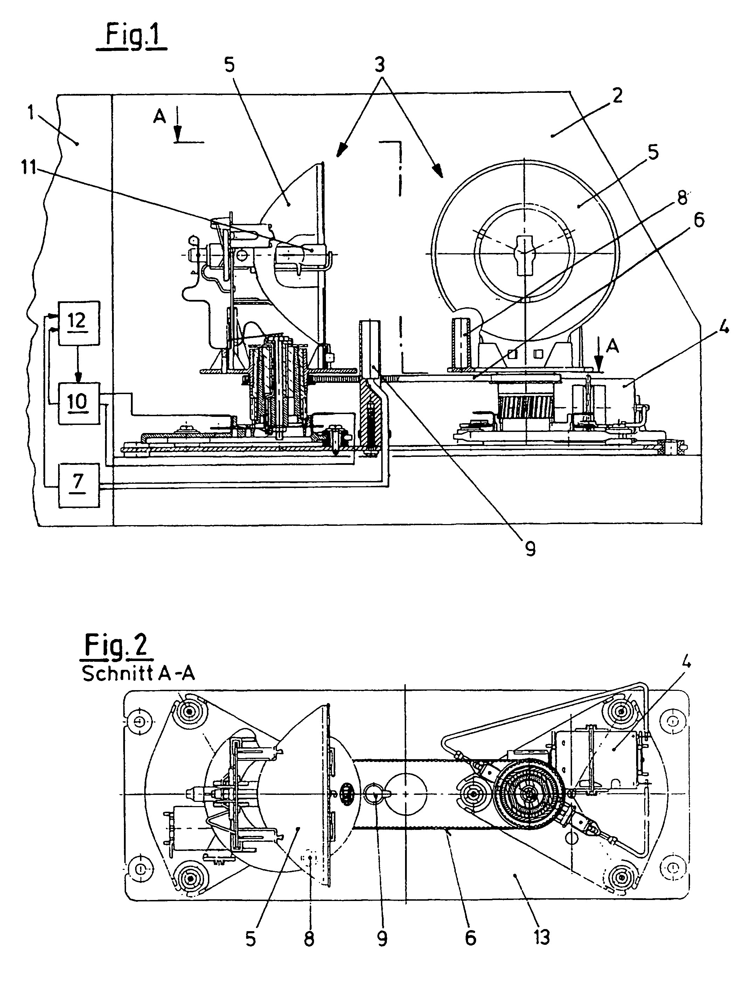

Es zeigen Figur 1 schematisch ein Ende einer Warnblinklichtanlage, teilweise geschnitten, und Figur 2 einen Schnitt durch die die Rundumkennleuchten enthaltende Baugruppe der Warnblinklichtanlage gemäß Figur 1.

In der Figur 1 weist die Warnblinklichtanlage einen Dachbalken (1) auf, der in der Figur 1 nur teilweise dargestellt ist. An dem in der Figur 1 dargestellten Ende des Dachbalkens (1) ist eine lichtdurchlässige Haube (2) angeordnet, in der zwei Rundumkennleuchten (3) angeordnet sind. Bei den dargestellten Rundumkennleuchten (3) handelt es sich um Standardrundumkennleuchtenmodule, die auch in Einzelrundumkennleuchten verwendet werden, wie dies beispielsweise aus der DE 40 32 438 A1 hervorgeht. Dort ist auch der konstruktive Aufbau dieser Rundumkennleuchten (3), soweit er standardmäßig vorgesehen ist, deutlicher dargestellt und näher erläutert. Bei den verwendeten Rundumkennleuchten (3) handelt es sich um Rundumkennleuchten (3), bei denen nicht nur die Reflektoren (5), sondern auch die Glühlampen (11) gedreht werden. Es ist jedoch auch möglich, die Glühlampen (11) jeweils feststehend auszubilden und den Reflektor (5) jeweils um die Glühlampe (11) herum drehen zu lassen.

Die Reflektoren (5) der Rundumkennleuchten (3) werden durch einen elektrischen Antriebsmotor (4) gedreht, der mittels eines Schneckengetriebes seine Kraft auf einen der beiden Reflektoren (5) überträgt. Die Kraftübertragung von diesem einen Reflektor (5), in der Figur 1 rechts, auf den anderen Reflektor (5), in der Figur 1 links, erfolgt mittels eines Treibriemens (6), der als Zahnriemen ausgebildet ist.

Wegen der Kraftübertragung durch den Treibriemen (6) ist an der in der Figur 1 linken Rundumkennleuchte (3) kein separater elektrischer Antriebsmotor erforderlich. In der Figur 1 ist dies nur für die dort links angeordnete Rundumkennleuchte (3) dargestellt. Tatsächlich weisen jedoch beide Rundumkennleuchten (3) eine gemeinsame Einrichtung (7) zur Kontrolle der Rotation der Reflektoren (5) auf. Diese Einrichtung (7) weist weiterhin einen Magneten (8) auf, der dem jeweiligen Reflektor (5) zugeordnet ist und sich mit diesem mitdreht. Die Drehstellung des Magneten (8) der inneren Rundumkennleuchte (3) wird durch einen Hallsensor (9) als Teil der Einrichtungen (7) zur Kontrolle der Rotation ermittelt. Die sich ergebende Information über die Drehung bzw. den Stillstand des inneren Reflektors (5) Reflektoren (5) wird an eine Einrichtung (12) zum Schalten der Rundumkennleuchten (3) weitergeleitet.

Weiterhin weist jede der Rundumkennleuchten (3), auch wenn dies in der Figur 1 nur für die linke Rundumkennleuchte dargestellt ist, eine Einrichtung (10) zur Kontrolle der Glühlampen (11) auf. Das Ergebnis dieser Kontrolle, nämlich ob die Glühlampe funktionsfähig ist oder nicht, wird ebenfalls an die Einrichtung (12) zum Schalten der Rundumkennleuchten (3) weitergeleitet. Alle Einrichtungen (7, 10 und 12) können vorteilhaft im Dachbalken (1) der Warnblinklichtanlage angeordnet werden.

In der Figur 2 sind gleiche oder gleichwirkende Einrichtungsteile wie in der Figur 1 mit denselben Bezugszeichen versehen. Man erkennt in der Figur 2 sehr deutlich den modularen Aufbau der Rundumkennleuchtenanordnung, bestehend aus zwei Rundumkennleuchtenmodulen (3), die zum Zweck der Kraftübertragung durch den Treibriemen (6) miteinander verbunden sind. Dabei sind beide Module auf einer Trägerplatte (13) angeordnet.

Die Einrichtung (12) zum Schalten der Rundumkennleuchten (3) steuert dabei gemeinsam sowohl den Schaltzustand der Glühlampen (11) als auch die Bestromung des elektrischen Antriebsmotors (4). Die Steuerung erfolgt dabei abhängig von der gewünschten Reaktion der Warnblinklichtanlage auf den Ausfall einer Glühlampe (11), auf den Riß des Treibriemens (6) oder den Ausfall des Antriebsmotors (4). So ist es möglich, bei Ausfall einer Glühlampe (11) einer Rundumkennleuchte (3) nur die zugehörige Rundumkennleuchte ausgeschaltet zu lassen und die übrigen Rundumkennleuchten (3) wie bisher gemeinsam mit dem Antriebsmotor (4) anzusteuern. Dabei kann der Defekt der Glühlampe (11) jedoch dem Bediener des Kraftfahrzeuges gemeldet werden.

Es ist jedoch auch möglich, bei einem derartigen Glühlampenausfall alle Glühlampen (11) eines Endes des Dachbalkens (1) auszuschalten und auch den entsprechenden Antriebsmotor (4) abzuschalten. Schließlich ist es möglich, bei einem derartigen Ausfall alle Rundumkennleuchten (3) und beide Antriebsmotoren (4) an beiden Enden des Dachbalkens (1) auszuschalten.

Reißt ein Treibriemen (6), so ist zumindest die Ausschaltung der Glühlampe (11) der in der Figur 1 linken inneren Rundumkennleuchte (3) erforderlich, um eine Überhitzung von Teilen der Warnblinklichtanlage zu vermeiden. In diesem Fall kann jedoch auch der Antriebsmotor (4) ausgeschaltet werden, so daß alle Rundumkennleuchten (3) eines Endes des Dachbalkens (1) ausgeschaltet werden, um den Defekt noch deutlicher zu signalisieren.

Bei Ausfall eines elektrischen Antriebsmotors (4) sind wegen der genannten Überhitzungsprobleme demzufolge dann alle Glühlampen (11) eines Endes des Dachbalkens auszuschalten, so daß alle Rundumkennleuchten (3) dieses Endes ausgeschaltet sind. Dies vermindert zwar die Warnfunktion der Warnblinklichtanlage. Aufgrund der nach wie vor gegebenen Funktion des anderen Endes des Dachbalkens ist jedoch noch eine verminderte Warnfunktion gewährleistet.

## Patentansprüche

1. Warnblinklichtanlage für Kraftfahrzeugdächer mit einem Dachbalken (1), an dessen Enden lichtdurchlässige Hauben (2) angeordnet sind, mit einer Mehrzahl von Rundumkennleuchten (3), die jeweils in den Hauben (2) angeordnet sind, mit mindestens einem elektrischen Antriebsmotor (4) zum Drehen der Reflektoren (5) der Rundumkennleuchten (3) und mit einem Treibriemen (6) zur Kraftübertragung der Drehbewegung zwischen Rundumkennleuchten (3), **dadurch gekennzeichnet, daß** den Rundumkennleuchten (3) einer Haube (2) jeweils ein Antriebsmotor (4) zugeordnet ist, daß der Antriebsmotor (4) jeweils den äußeren Rundumkennleuchten (3) zugeordnet ist und daß die Rundumkennleuchten (3) jeweils einer Haube (2) durch Treibriemen (6) miteinander verbunden sind.

2. Warnblinklichtanlage nach Anspruch 1, **dadurch gekennzeichnet, daß** die Rundumkennleuchten (3) jeweils einer Haube (2) eine gemeinsame Einrichtung (7) zur Kontrolle der Rotation des Reflektors (5) aufweisen, die der inneren Rundumkennleuchte (3) zugeordnet ist.

3. Warnblinklichtanlage nach Anspruch 2, **dadurch gekennzeichnet, daß** die Einrichtungen (7) jeweils einen dem Reflektor (5) zugeordneten Magneten (8) und jeweils einen Hallsensor (9) aufweisen.

4. Warnblinklichtanlage nach Anspruch 1, **dadurch gekennzeichnet, daß** alle Rundumkennleuchten (3) jeweils eine Einrichtung (10) zur Kontrolle der Glühlampen (11) aufweisen.

5. Warnblinklichtanlage nach Anspruch 2 und/oder Anspruch 4, **dadurch gekennzeichnet, daß** bei Ausfall einer Glühlampe (11) oder Stillstand eines Reflektors (5) nur die betroffene Rundumkennleuchte (3) ausgeschaltet wird.

6. Warnblinklichtanlage nach Anspruch 2 und/oder Anspruch 4, **dadurch gekennzeichnet, daß** bei Ausfall einer Glühlampe (11) oder Stillstand eines Reflektors (5) alle Rundumkennleuchten (3) des betroffenen Endes der Warnblinklichtanlage ausgeschaltet werden.

7. Warnblinklichtanlage nach Anspruch 2 und/oder Anspruch 4, **dadurch gekennzeichnet, daß** bei Ausfall einer Glühlampe (11) oder Stillstand eines Reflektors (5) alle Rundumkennleuchten (3) der Warnblinkanlage ausgeschaltet werden.

8. Warnblinklichtanlage nach Anspruch 1, **dadurch gekennzeichnet, daß** der Treibriemen (6) ein Zahnriemen ist.

## Claims

1. Hazard warning flasher unit for a vehicle roof, having a roof bar (1) at the ends of which are arranged transparent domes (2), and having multiple 360°-arc-projection identification lamps (3), in each case arranged in the domes (2), with at least one electric drive motor (4) for turning the reflectors (5) of the identification lamps (3) and with a driving belt (6) for transmitting the rotational movement between identification lamps (3),
**characterised in that** a drive motor (4) is operatively associated with each of the identification lamps (3), that the drive motor (4) is in each case operatively associated with the outer identification lamps (3), and that the identification lamps (3) of any one dome (2) are connected to one another by driving belts (6).

2. Hazard warning flasher unit according to claim 1, **characterised in that** the 360°-arc-projection identification lamps (3) of any one dome (2) incorporate a common device (7) for controlling the rotation of the reflector (5), said device being operatively associated with the inner identification lamp (3).

3. Hazard warning flasher unit according to claim 2, **characterised in that** each of the devices (7) incorporates a magnet (8) operatively associated with the reflector (5), and each of them incorporates a Hall sensor (9).

4. Hazard warning flasher unit according to claim 1, **characterised in that** each of the 360°-arc-projection identification lamps (3) incorporates a device (10) for controlling the incandescent bulbs (11).

5. Hazard warning flasher unit according to claim 2 and/or claim 4, **characterised in that** in the event of an incandescent bulb (11) failing or of a reflector (5) coming to a standstill, only the affected 360°-arc-projection identification lamp (3) is switched off.

6. Hazard warning flasher unit according to claim 2 and/or claim 4, **characterised in that** in the event of an incandescent bulb (11) failing or of a reflector (5) coming to a standstill, all the 360°-arc-projection identification lamps (3) of the affected end of the hazard warning flasher unit are switched off.

7. Hazard warning flasher unit according to claim 2 and/or claim 4, **characterised in that** in the event of an incandescent bulb (11) failing or of a reflector (5) coming to a standstill, all the 360°-arc-projection identification lamps (3) of the hazard warning flasher unit are switched off.

8. Hazard warning flasher unit according to claim 1, **characterised in that** the driving belt (6) is a toothed belt.

## Revendications

1. Installation de feux clignotants d'avertissement pour des toitures de véhicule, comportant une poutre de toiture (1) aux extrémités de laquelle sont agencées des calottes (2) translucides, comportant une multitude de gyrophares (3) qui sont agencés chacun dans les calottes (2), comportant au moins un moteur d'entraînement électrique (4) pour faire tourner les réflecteurs (5) des gyrophares (3), et comportant une courroie d'entraînement (6) pour la transmission de force du mouvement de rotation entre les gyrophares (3), **caractérisée en ce qu'**à chaque gyrophare (3) d'une calotte est associé un moteur d'entraînement (4), **en ce que** le moteur d'entraînement (4) est associé à chacun des gyrophares extérieurs (3) et **en ce que** les gyrophares (3) d'une calotte (2) respective sont reliés les uns aux autres par des courroies d'entraînement (6).

2. Installation de feux clignotants d'avertissement selon la revendication 1, **caractérisée en ce que** les gyrophares (3) d'une calotte (2) respective présentent un dispositif commun (7) pour contrôler la rotation du réflecteur (5), lequel est associé au gyrophare (3) intérieur.

3. Installation de feux clignotants d'avertissement selon la revendication 2, **caractérisée en ce que** les dispositifs (7) présentent chacun un aimant (8) associé au réflecteur (5) et un capteur de Hall (9).

4. Installation de feux clignotants d'avertissement selon la revendication 1, **caractérisé en ce que** tous les gyrophares (3) présentent chacun un dispositif (10) de contrôle des lampes à incandescence (11).

5. Installation de feux clignotants d'avertissement selon la revendication 2 et/ou la revendication 4, **caractérisée en ce qu'**en cas de défaillance d'une lampe à incandescence (11) ou en cas d'immobilisation d'un réflecteur (5), seul le gyrophare (3) concerné est éteint.

6. Installation de feux clignotants d'avertissement selon la revendication 2 et/ou la revendication 4, **caractérisée en ce qu'**en cas de défaillance d'une lampe à incandescence (11) ou en cas d'immobilisation d'un réflecteur (5), tous les gyrophares (3) de l'extrémité concernée l'installation de feux clignotants d'avertissement sont éteints.

7. Installation de feux clignotants d'avertissement selon la revendication 2 et/ou la revendication 4, **caractérisée en ce qu'**en cas de défaillance d'une lampe à incandescence (11) ou en cas d'immobilisation d'un réflecteur (5), tous les gyrophares (3) de l'installation de feux clignotants d'avertissement sont éteints.

8. Installation de feux clignotants d'avertissement selon la revendication 2 et/ou la revendication 4, **caractérisée en ce que** la courroie d'entraînement (6) est une courroie dentée.
